Europäisches Patentamt

European Patent Office

Office européen des brevets

(11) Publication number: **0 461 280 A1**

## EUROPEAN PATENT APPLICATION

(21) Application number: 90111071.8

(51) Int. Cl.5: **A01B 29/06, A01B 73/02**

(22) Date of filing: **12.06.90**

(43) Date of publication of application:
**18.12.91 Bulletin 91/51**

(84) Designated Contracting States:
**AT CH DE DK ES FR GB IT LI SE**

(71) Applicant: **MARSK STIG DANMARK A/S**
**Skaelskor Landevej 3**
**DK-4200 Slagelse(DK)**

(72) Inventor: **Rasmussen, Lars Christian**

Margrethevej 20
**DK-4250 Fuglebjerg(DK)**
Inventor: **Andersen, Steen**
**Skaelskor Landevej 3**
**DK-4200 Slagelse(DK)**

(74) Representative: **Roerboel, Leif et al**
**c/o Dansk Patent Kontor A/S H.C.**
**Oerstedsvej 70**
**DK-1879 Frederiksberg C(DK)**

(54) **Agricultural roller with an operative state and a transport state.**

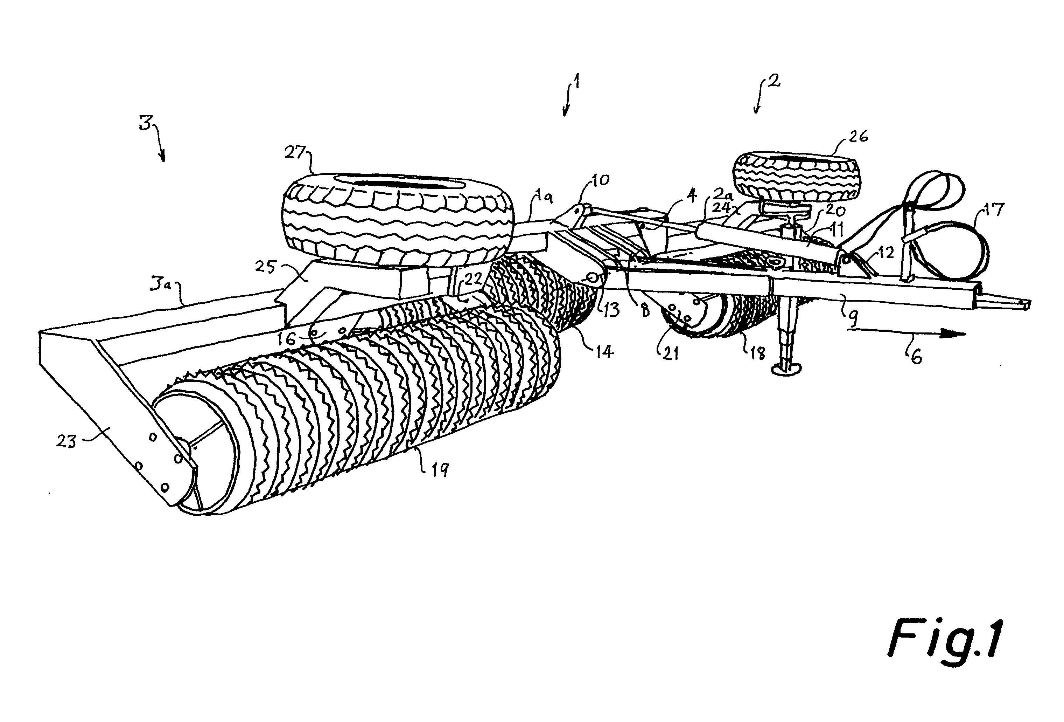

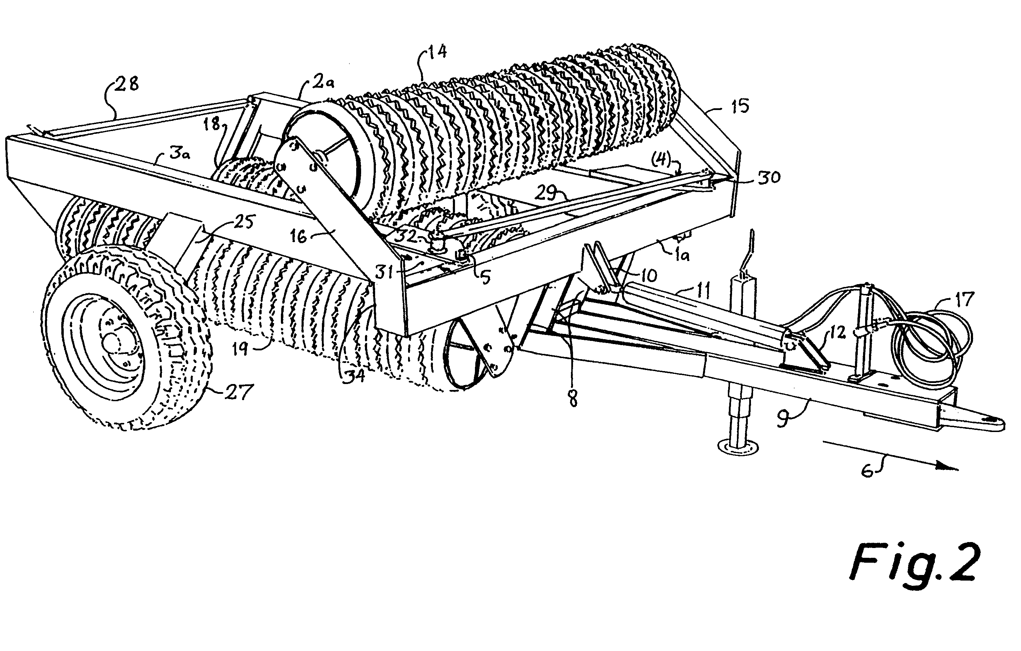

(57) In an agricultural roller of the kind comprising a central section (1) and lateral sections (2, 3) hinged (4, 5) to the central section, so that the roller may be changed between an operative state (Figure 1) to an inoperative, transport state (Figure 2), the main novel feature is that the various rollers or sets of rollers (14, 18 19) and transport wheels (26, 27) are placed in such a manner relative to the central and lateral frame sections (1a, 2a, 3a), that when in the transport state (Figure 2), the lateral rollers (18, 19) are "slung low" and close to each other, while the transport wheels (26, 27) are far apart, thus giving a low center of gravity and a wide wheelbase. In this manner, stability in the transport state is improved.

*Fig.1*

*Fig.2*

TECHNICAL FIELD

The present invention relates to an agricultural rolling implement of the kind set forth in the preamble of claim 1.

BACKGROUND ART

In previously known agricultural rolling implements of the kind initially referred to, problems may arise with the implement in the transport state, as in this state of the previously known implements, the lateral rollers are placed at a comparatively high level and the transport wheels exhibit a comparatively narrow wheel base, thus producing a risk of the implement tipping over when it is being towed by a tractor on farm roads, that may be rough and/or have a high sideways inclination.

DISCLOSURE OF THE INVENTION

It is the object of the present invention to provide an agricultural rolling implement of the kind initially referred to, which in its transport state exhibits a considerably improved roadability, thus reducing the risk of tipping over under the conditions mentioned above. This object is achieved with an agricultural rolling implement of the kind referred to above, which according to the present invention is characterized by the features set forth in the characterizing clause of claim 1. With this arrangement, the centre of gravity of the lateral rollers is lowered to a substantially lower level than before, and the transport wheels are placed with a considerably increased distance between them, so that the stability is correspondingly improved.

Advantageous embodiments of the implement according to the invention, the effects of which are explained in the following detailed portion of the present specification, are set forth in claims 2-7.

BRIEF DESCRIPTION OF THE DRAWINGS

In the following detailed specification, the present invention will be explained in more detail with reference to the drawings showing an exemplary embodiment of an agricultural roller according to the present invention, and in which

Figure 1 is a perspective view seen from approximately "the nine o'clock direction" of the roller in its operative state,

Figure 2 is a view seen in generally the same direction as in Figure 1, but with the roller in its transport position,

Figure 3 is a perspective view, seen from approximately "the five o'clock position" showing a first stage in the operation of changing from the transport state to the operative state,

Figure 4 is a view corresponding to Figure 3, but at a later stage in the operation referred to,

Figure 5 is a magnified view showing an abutment function to be explained below, and

Figure 6 is an exploded view showing in perspective the various parts of the roller with the exception of the ground rollers and the transport wheels, as well as the way in which these parts are assembled.

For the sake of good order it should be mentioned at this stage, that the drawing, in addition to the parts of importance for understanding the present invention, also shows a small number of parts not referred to in the following specification. A person skilled in this particular art will, however, when perusing the drawing be able to understand the practical significance of these parts.

DESCRIPTION OF THE PREFERRED EMBODIMENT

The agricultural roller shown in the drawing consists in a manner known in principle of three main sections, viz. a central section 1 and two lateral sections, a left-hand lateral section 2 and a right-hand lateral section 3, the three sections being hinged together by means of hinge pins 4 and 5, respectively, the axes of the latter in the operating position shown in Figure 1 extending generally horizontally and in the direction of normal motion shown by an arrow 6.

The central section 1 consists of a beam-like central frame member 1a, the central portion of which is secured to two pairs of pivoting brackets 8 pivotably connected to the rear end of a drawbar 9, the forward end of which is adapted to be connected to a tractor. Further, the central portion of the central frame member 1a carries a pair of operating brackets 10 connected to one end of a hydraulic cylinder 11, the other end of which is connected to pair of upstanding brackets 12 on the upper side of the drawbar 9. By operating the hydraulic cylinder 11, the assembly consisting of the three section 1, 2 and 3 may be rotated relative to the drawbar 9 about the pivoting axis 13 between the operating position shown in Figure 1, in which a central roller set 14 rotatably supported between legs 15 and 16 secured to the ends of the central frame member 1a may roll on the ground, and the transport position shown in Figure 2, in which the roller set 14 is lifted well above the ground. It will be seen that in the operating position shown in Figure 1, the roller-carrying legs 15 and 16 (of which only the latter may be seen clearly in Figure 1) extend generally in an oblique direction downwards and rearwards, whilst they in the transport position shown in Figure 2 extend generally upwards and rearwards.

The hydraulic cylinder 11 is adapted to be connected to the hydraulic system on the tractor by means of flexible hydraulic tubes 17.

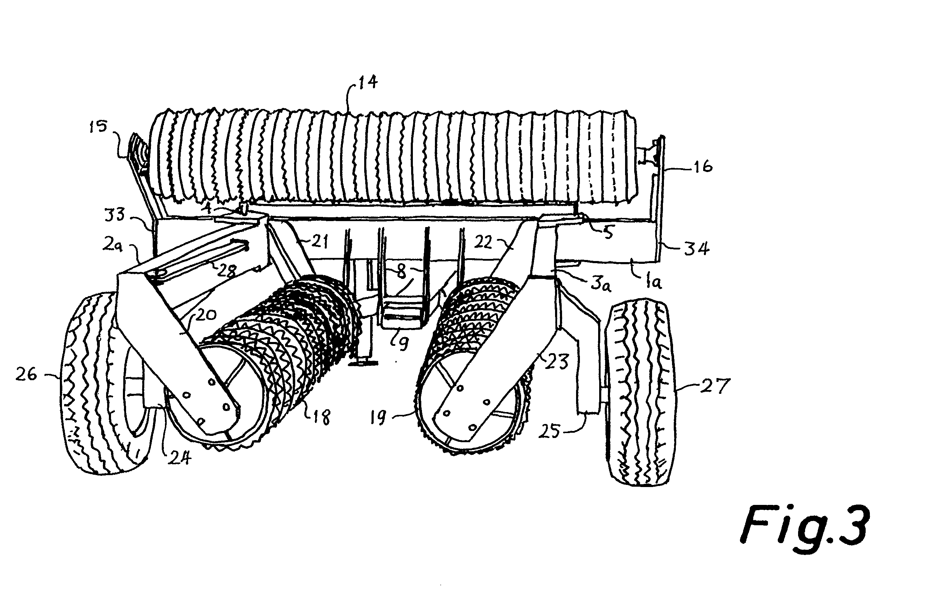

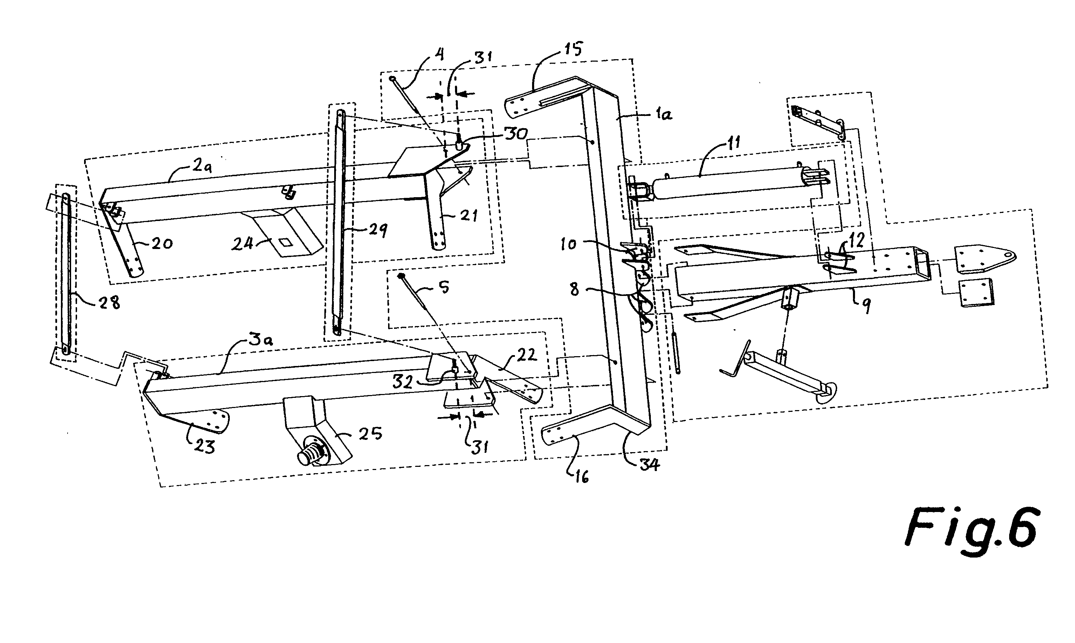

Each of the two lateral sections 2 and 3 comprises a lateral frame member 2a and 3a, each having a roller set 18, 19, respectively, rotatably supported on roller-carrying legs 20 and 21, 22 and 23, respectively, best seen in Figures 3, 4 and 6. Further, each of the two lateral sections 2 and 3 carries a wheel-carrying leg 24, 25, respectively, on which the associated transport wheel 26, 27, respectively, is rotatably supported about an axis extending at right angles to the axis of the associated roller set 18, 19 respectively.

In the transport position shown in Figure 2, the two lateral frame members 2a and 3a extend parallel to each other, their rear ends being interconnected by a transport link rod 28, one end of which is hingedly connected to the rear end of the left-hand frame member 2a, whilst its opposite end is releasably connected to the right-hand frame member 3a, such as by a latch or the like (not shown). The forward ends of the two lateral frame members 2a and 3a are - apart from the interconnection through the hinge pins 4 and 5 and the central frame member 1a - interconnected through a control link rod 29, the left-hand end of which is hingedly connected to the left-hand frame member 2a through a control pin 30 placed at a distance 31 forward from the left-hand hinge pin 4, whilst its right-hand end is hingedly connected to the right-hand frame member 3a through a similar control pin 32 placed the same distance 31 rearward from the right-hand hinge pin 5.

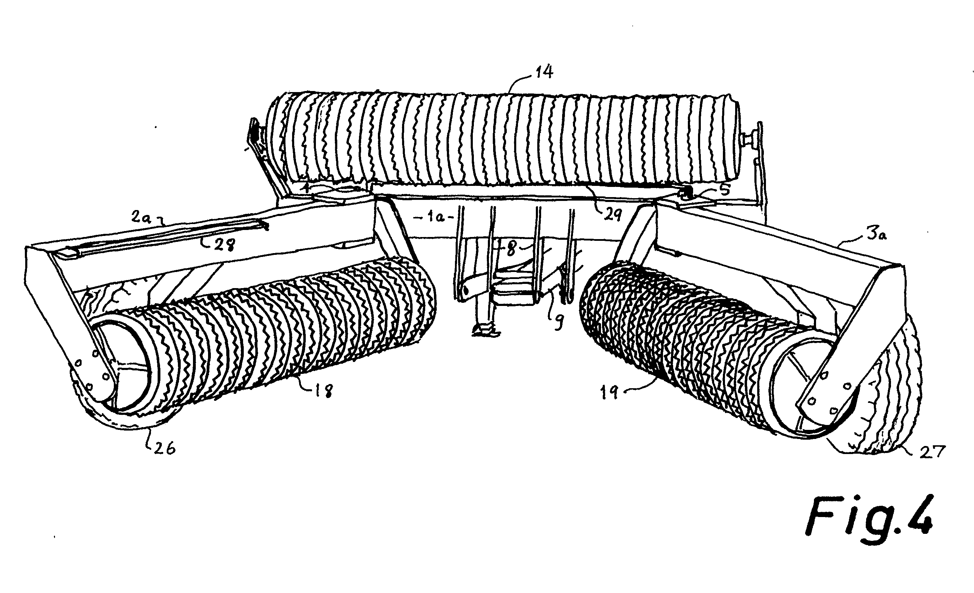

When the agricultural roller shown in the drawing is to be changed from the transport position shown in Figure 2 to the operating position shown in Figure 1, the roller is connected to a tractor (not shown) by means of the drawbar 9 and the hydraulic tubes 17, after which the transport link rod 28 is released from the right-hand frame member 3a and "parked" on the left-hand frame member 2a as shown in Figures 3 and 4.

The next step in this procedure is to run the tractor slowly in the reverse direction, i.e. the direction opposite to the normal direction of motion 6, the unavoidable friction between the transport wheels 26 and 27 and the ground causing the lateral frame members 2a and 3a to swing outwards as indicated in Figures 3 and 4, a symmetrical motion being ensured by means of the control link rod 29 constraining the movement of the lateral frame members 2a and 3a relative to the central frame member 1a to angular movements of the same magnitude but in opposite directions.

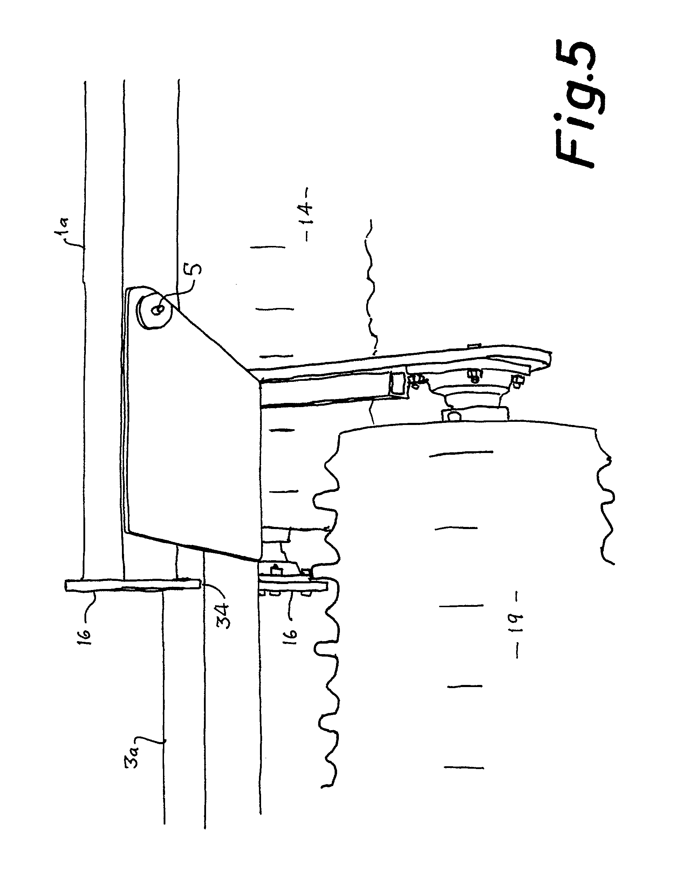

When continuing the rearward movements of the central frame member 1a beyond the position shown in Figure 4, the two lateral frame members 2a and 3a will eventually take up positions, in which they are parallel to the central frame member 1a, the final parallel position being defined by abutment edges 33 and 34 on the "roots" of the roller-carrying legs 15 and 16, respectively on the central frame member 1a, these abutment edges in this final position abutting against the lateral frame members 2a and 3a, respectively, vide especially Figure 5 showing the latter abutment.

When the final position (not shown) mentioned has been reached, the hydraulic cylinder 11 is operated so as to lower the central frame member 1a about the pivoting axis 13 - anti-clockwise as viewed in Figure 1 - so that the central roller set 14 is lowered to the ground, whilst the transport wheels 26 and 27 are swung upwards and the associated roller sets 18 and 19 downwards into contact with the ground, the final situation being the one shown in Figure 1. The roller is now ready for operation while being moved along the ground in the direction shown by the arrow 6.

When it is desired to change the roller back into the transport position shown in figure 2, the hydraulic cylinder 11 is operated so as to swing the assembly comprising the central frame member 1a and the lateral frame members 2a and 3a about the pivot axis 13 - clockwise as viewed in Figure 1 - so that the transport wheels 26 and 27 are brought into contact with the ground and the associated roller sets 18 and 19 lifted off the ground. Then, the tractor is set into motion in the direction 6, thus pulling the central frame member 1a in the forward direction, the engagements of the transport wheels 26 and 27 with the ground causing the lateral frame members 2a and 3a to swing inwards by equal amounts as controlled by the control link rod 29, finally ending up with the situation shown in Figure 2, with the sole exception that the transport link rod 28 is yet to be latched on to the right-hand frame member 3a as shown in Figure 2.

With special reference to Figures 1 and 5 it will be seen that the lateral frame members 2a and 3a and their associated rollers 18 and 19, respectively are prevented by the abutment function shown in figure 5 from swinging upwards about the hinge pins 4 and 5, respectively relative to the central frame member 1a. When working on a reasonably even field, this is not a problem, but in the case of rough or uneven fields, it may be desirable to allow the upward swinging movement indicated. This could easily be achieved in a manner not shown by arranging the abutment function illustrated in Figure 5 to be inoperative in the operative state of the roller shown in Figure 1. Persons skilled in this particular art will be able to devise such an arrangement without further guidance from the present specification.

Especially when viewing Figure 2 it will be obvious that the roller according to the present invention possesses an extremely good roadability. This is partly because its center of gravity is low, due to 2/3 of the roller mass being very close to the ground, partly because of the wide wheelbase achieved by placing the transport wheels 26 and 27 on legs 24 and 25 projecting downwards and laterally outwards in the position shown in Figure 2. Thus, there is hardly any risk at all that the roller will tip over, even on rough roads or on roads with a high sideways inclination.

## Claims

1. An agricultural rolling implement adapted to be towed by a tractor and of the kind comprising

   a) a central section (1) comprising a central frame member (1a) adapted to be connected (8, 9) to said tractor and comprising legs (15, 16), between which a central roller or set of rollers (14) is rotatably supported in a manner enabling it in the implement's operative state to roll on the ground,

   b) two lateral sections (2, 3) each comprising a frame member (2a, 2b) hingedly (4, 5) connected to said central frame member (1a) at an end of the latter, said lateral sections each likewise comprising legs (20-23), between which lateral rollers or sets of rollers (18, 19) are rotatably supported in a manner enabling them in the implement's operative state to roll on the ground, said lateral sections also having transport wheels (26, 27) adapted in the implement's transport state to roll on the ground, in which transport state the two lateral sections are extending at substantially right angles in the rearward direction from said central section, and

   c) means to change the implement from the operative state to the transport state and vice versa by changing the relative positions and orientations of the central and lateral sections,
   **characterized** in

   d) such an arrangement of said rollers or sets of rollers (14, 18, 19), said transport wheels (26, 27), said frame members (1a, 2a, 3a), and said hinges (4, 5), that when the implement is in the transport state (Figure 2), the central roller or set of rollers (14) is on a level above the level of the central frame member (1a), while the lateral rollers or sets of rollers (18, 19) are at levels below the levels of the lateral frame members (2a, 3a), the transport wheels (26, 27) being laterally outside of and reaching to a level below the lateral rollers or sets of rollers (18, 19).

2. An implement according to claim 1 and of the kind comprising

   a) a drawbar (9) for connection with a tractor and extending in the forward direction from

   b) a central frame member (1a) pivotably connected to said drawbar for movement about an axis (13) substantially parallel to said central frame member (1a) between a first or operating position (Figure 1) and a second or transport position (Figure 2),
   **characterized** in

   c) that in said first position (Figure 1) of the central frame member (1a), its roller-carrying legs (15, 16) extend generally obliquely downwards and rearwards,

   d) that in said second position (Figure 2) of the central frame member (1a), its roller-carrying legs (15, 16) extend generally obliquely upwards and rearwards,

   e) that the axes of the hinges (4, 5) connecting the lateral frame members (2a, 3a) to central frame member (1a) are oriented relative to said central frame member (1a) in such a manner, that with the latter in said first position (Figure 1), they extend substantially horizontally and at right angles to the length direction of the central member (1a), and

   f) that the lateral frame members (2a, 3a) are oriented relative to said hinge axes in such a manner, that when placed in continuation with or substantially parallel to said central frame member (1a) in said first position of the latter, their roller-carrying legs (20-23) extend generally obliquely downwards and forwards and the legs (24, 25) carrying their transport wheels (26, 27) generally obliquely upwards and forwards.

3. An implement according to claim 2, **characterized** in that the hinge axes of the hinges (4, 5) connecting the lateral frame members (2a, 3a) to central frame member (1a) are placed so far towards the middle of the central frame member, and the roller-carrying leg (21, 22) closest to each hinge axis on each lateral frame member is placed so close to said hinge axis, and that the rollers or sets of rollers (14, 18, 19) associated with the central and lateral frame members have such an extent, that the ends of the rollers or sets of rollers (14) associated with the central frame member (1a) are further from the implement's central longitudinal plane than the innermost ends of the rollers or sets of rollers (18, 19) associated with the lateral frame members (2a, 3a).

4. An implement according to claim 3, **characterized** by means (33, 34) limiting the upward swing of the lateral frame members (2a, 3a) relative to the central frame member (1a), when the latter is in said first position (Figure 1).

5. An implement according to claim 4, **characterized** in that said swing limiting means (33, 34) are adapted to limit said upward swing to a relative position of the central (1a) and lateral (2a, 3a) frame members, in which the latter extend substantially parallel to the former.

6. An implement according to claim 4 or 5, **characterized** in that said swing limiting means are adapted to be made inoperative, at least during the implement's operative state (Figure 1).

7. An implement according to any one or any of the claims 1-6, **characterized** in that said lateral frame members (2a, 3a) are connected to each other and to the central frame section (1a) by means of a control mechanism (29, 30, 32) ensuring that each of the two lateral frame sections (2a, 3a) always forms an angle with the central frame member (1a) of the same magnitude but opposite orientation as the angle formed by the other lateral frame member with the central frame member.

Fig.1

EP 0 461 280 A1

Fig.2

Fig.3

Fig.4

Fig.5

Fig.6

European
Patent Office

**EUROPEAN SEARCH REPORT**

Application Number

**EP 90 11 1071**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 804 134 (STARK)<br>* Figures 1-3,7-9,11,15-17; page 1, lines 3-17; page 3, lines 12-14; page 3, lines 25-35; page 4, lines 22-29; page 10, lines 20-25; page 11, lines 13-16,24-31 *<br>– – – | 1-7 | A 01 B 29/06<br>A 01 B 73/02 |
| Y | GB-A-2 006 592 (YSTADS GJUTERI & MEK. VERKSTADS AB)<br>* Figures 1,4,5; page 1, lines 30-41,55-66,84-88; page 2, lines 6-13 *<br>– – – | 1-7 | |
| A | GB-A-2 057 833 (FLEXI-COIL LTD)<br>* Figures 1,2; page 1, lines 36-43,60-65,93-104; page 2, lines 31-39,73-78 *<br>– – – | 1-6 | |
| A | FR-A-2 500 982 (LHOSPITALIER)<br>* Figure 3; page 6, lines 7-24 *<br>– – – – – | 7 | |
| | | | **TECHNICAL FIELDS SEARCHED (Int. Cl.5)**<br><br>A 01 B 29/04<br>A 01 B 29/06<br>A 01 B 73/02<br>A 01 B 73/06 |

The present search report has been drawn up for all claims

| Place of search | Date of completion of search | Examiner |
|---|---|---|
| The Hague | 29 November 90 | RAVEN P.A |